# EUROPEAN PATENT APPLICATION

(11) **EP 3 334 099 A1**
(43) Date of publication of application: **13.06.2018**
(21) Application number: 16832372.3
(22) Date of filing: 29.07.2016
(51) Int. Cl.: H04L 12/58, G10L 15/18

(54) **INSTANT MESSAGING SYSTEM**

(30) Priority: 06.08.2015 ES 201531171
(71) Applicant: Proyectos y Soluciones Tecnologicas Avanzadas, S.L, 30100 Murcia (ES)
(72) Inventor: NOGUERA ARNALDOS, José, Angel, 30100 Murcia (ES); MEGÍAS OLMOS, Ramón, 30100 Murcia (ES); MONTESINOS NAVARRO, José, Salvador, 30100 Murcia (ES); JIMÉNEZ ASENSIO, Juan, Antonio, 30100 Murcia (ES); JIMÉNEZ ALBURQUERQUE, José, Francisco, 30100 Murcia (ES); SOTO LOZANO, Jorge, 30100 Murcia (ES)
(74) Representative: Herrero & Asociados, S.L.
(86) International application number: PCT/ES2016/070584
(87) International publication number: WO 2017/021579

(57) **Abstract**

The invention relates to an instant messaging system comprising an instant messaging application (20) for communication between users (100) and machines (70) by means of natural language, which also comprises a server (30) that communicates the mobile terminal (10) with an electronic device (60) which, in turn, communicates and acts on the machine (70), by means of an API (40) via which the user (100) accesses the machine (70). The electronic device (60) is connected to the server (30) through a router terminal (50). Said electronic device (60) comprises hardware configurable by means of the instant messaging application (20) and includes an interpreter module (62) for translating between natural language messages exchanged by the instant messaging application (20) and specific commands from the machine (70). The interpreter (62) is implemented by means of firmware embedded in the hardware of the electronic device (60) and is based on artificial intelligence techniques and ontologies.

## Description

### Object of the Invention

The present invention is comprised in the technical field of telecommunications. More particularly, the present invention relates to instant messaging services for person-to-person, machine-to-machine and person-to-machine communication through mobile devices.

### Background of the Invention

There currently is a wide array of electronic systems and computer applications for portable terminals, such as smartphones and tablets, to allow sending instant messages. Current instant messaging technologies (for example, Whatsapp, Telegram, etc.) have a number of drawbacks:
- They do not allow establishing a channel of natural language communication between users and other electronic devices for uses other than those relating to mobile telephony or chatting between people.
- They are not equipped with an instruction "translator" that can be used as a gateway between machine language and natural language for the purpose of allowing interaction with machines or other electronic devices.
- They do not allow forming interaction groups between users and machines or other electronic devices by means of natural language text messages.
- They do not allow receiving status messages interpreted in natural language.

To cite another example of instant messaging systems, ES2240734 discloses a mobile messaging system comprising at least one client device and a server, wherein the client device transmits user presence information to the server. The service for managing chats (instant conversations) between people through a mobile terminal interface should also be mentioned.

In all those existing cases in which mobile terminals are used for communication by instant messaging, said communication is device-to-device, to exchange messages (in natural language) between people, but not for messages that a person wants to direct to a device to communicate with it and vice versa (machine-to-person communication).

In the field of artificial intelligence, AIML (Artificial Intelligence Markup Language), which is a markup language based on XML (extensible Markup Language) that allows programming an intelligence capable of recognizing patterns in a text and generating suitable responses as a function of various system statuses and conditions, is known. This language is structured around in a series of tags and markups that allow defining the patterns the intelligence must look for in the text and the actions it must carry out when it finds any of them, such as responding to a question, modifying the value of a variable or activating certain signals, for example. It also has "wildcard" patterns, which redirect performance of the intelligence to the main pattern in the event of detecting any of the different ways that natural language has of giving the same order or asking the same question.

On the other hand, the Extensible Messaging and Presence Protocol (XMPP), also based on XML and originally conceived for instant messaging, is also known and it has the following advantages over other similar protocols:
- Security: it allows authentication of users and machines, data integrity and confidentiality. To that end, it uses the Transport Layer Security (TLS) protocol.
- Open standard: this is a highly regulated and tested protocol that has been under development for many years, which ensures its reliability.
- Flexibility: it allows the development of custom functionalities and facilitates integration with other systems developed based on this protocol.

The objective technical problem that is raised herein is to provide instant messaging means, which use already existing communication protocols to allow for a simple implementation, providing a "friendly" way of communication between system entities, where those entities may be both people and machines, including the possibility of person-to-person, machine-to-machine and person-to-machine communication.

### Description of the Invention

The present invention serves to solve the aforementioned problem by solving the drawbacks of the solutions discussed in the state of the art, providing an instant messaging system for communication between entities, where the entities may be both people and machines.

The communication of people with machines of the proposed system may be carried out both in natural language and through specific commands that users can send the machines. By means of instant messaging, users are able to interact with electronic devices (in the Internet-of-Things ecosystem) and make machines interact with machines from mobile devices of the users.

Since the machine can imitate the behavior of a person in this communication, in the context of the invention the machine may also be called a robot or "bot".

The proposed system has means for user-to-user, user-to-bot and bot-to-bot communication. System users may obtain the actual status of a bot, as well as the commands the bot can carry out, and modify the access control list of a bot to allow other users or bots to interact with it. System users can add machines (bots) to the system and establish themselves as the administrator of the added machine, as well as establish its initial configuration, update a bot profile, update its knowledge base and reset the bot to its initial configuration. In a preferred embodiment, the system prevents the fraudulent registration of bots and allows a bot to discover whether another bot implements a specific interface by establishing a relationship between them for a later communication. The bots are capable of executing actions and generating responses from specific commands or natural language messages received from a mobile device of the user. Users always interact with the system through their mobile devices (for example, smartphones, tablets, etc.).

The present invention allows a (non-expert) user to be able to interact, preferably in natural language, with other users and "bots" (for example, home appliances, industrial machines, illumination and so one and so forth) by means of instant messaging and Voice over Internet Protocol (VoIP) chatting. The communication interface used is chat-type (cyber chat) instant messaging social media, and the user of the chat can create groups of users, among which there are "bots," and can chat with them, and with other users, in natural language.

The system is constructed on different protocols and technologies used in other fields, expanding them with functionalities to achieve the objective of entities (human entities and machines) being able to communicate with one another. To that end, the system comprises an interpreter being run as firmware hosted in the machine (bot) hardware. That firmware is registered and acts directly on the bot. The technologies used in the system include:
- A short-range communication protocol (for example, Bluetooth): A protocol is developed on this technology to establish the initial configuration of a bot and register it in the system.
- A message transfer protocol for transferring messages over the Internet (for example, HTTP): It includes the requests to register users and bots in the system, the synchronization of users/contacts, Send/Receive multimedia, etc.

- A base protocol for communication of the different entities of the system, both human entities and machines (for example, XMPP), on which extensions are developed to allow the interaction (for example, with a simple click) of the users with the machines, as well as the interaction of the machines with one another, and allowing commands to be sent to the machines using a natural language.
- A language to implement the artificial intelligence that interacts with the user in natural language (for example, AIML, which recognizes patterns in the text of the messages of a chat).

Optionally, the system includes notification means to inform the users associated with a machine of its status changes, actions, etc.

Additionally, to register users and machines in the system, security protocols that prevent fraudulent registrations, identity spoofing and other attacks on entities of the system are included.

One aspect of the invention relates to an inter-entity instant messaging system, comprising an instant messaging application for communication between multiple users, between multiple machines, and between users and machines.

Some of the technical advantages of the invention over the solutions of the state of the prior art include the following:
The present invention is easily implemented with wireless electronics based on compatible microprocessors for integration in the already existing hardware of equipment and machinery manufacturers.

The proposed system includes an interpreter of the natural language based on artificial intelligence technique and ontologies, implemented as firmware embedded in existing electronics, as mentioned in the preceding paragraph.

It features a multiconfiguration capability that can be established by the user and of the creation of groups of simultaneous users between people and machines. These machines are equipped with an ontology-based intelligence computer algorithm to perform certain tasks as well as to respond to users in a colloquial language as if it were another human user of the system.

### Brief Description of the Drawings

A series of drawings which help to better understand the invention and expressly relate to an embodiment of said invention presented as a non-limiting example thereof are very briefly described below.
Figure 1 shows a block diagram of the architecture of the instant messaging system, according to a preferred embodiment of the invention.
Figure 2 shows a diagram of the interaction between blocks of the instant messaging system, according to a possible embodiment of the invention.
Figure 3 shows a block diagram of the functional architecture of the system user application, according to a possible embodiment of the invention.
Figures 4 shows a block diagram of the functional architecture of the system server application, according to a possible embodiment of the invention.
Figures 5 shows a block diagram of the functional architecture of a machine registered in the system, according to a possible embodiment of the invention.
Figure 6 shows a block diagram of the functional architecture of the firmware acting on a machine of the system, according to a possible embodiment of the invention.

### Preferred Embodiment of the Invention

Possible embodiments of the system proposed for real-time communication between entities by instant messaging are described below.

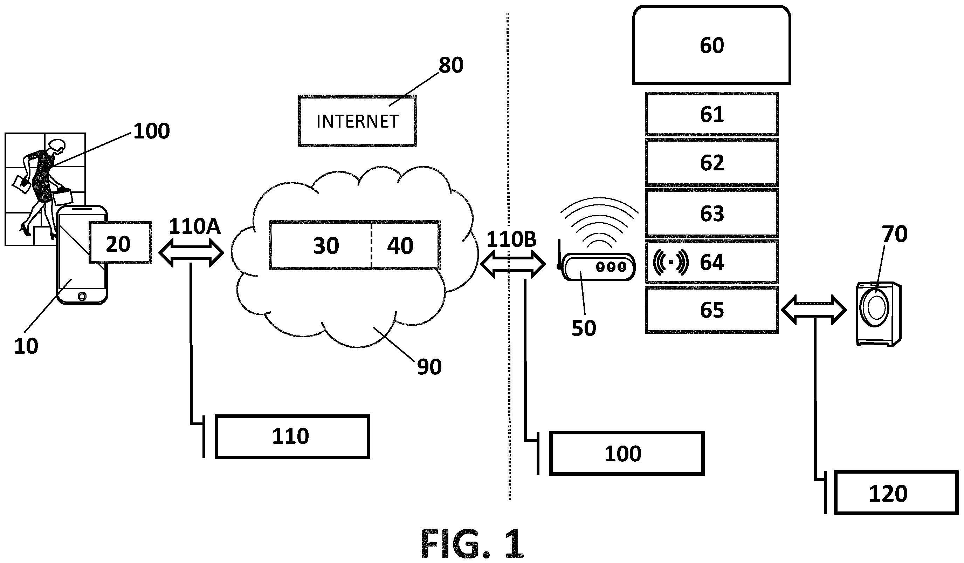

Figure 1 shows a schematic diagram of the block architecture of the instant messaging system between users (100) and machines (70) which are home appliances in the illustrated example. The system can use chat-type social media in which the user (100) is registered and which said user (100) uses by means of a mobile terminal (10), for user-user, user-home appliance and home appliance-home appliance communication, using instant messaging and, preferably, natural language. To that end, the system comprises:
In the part corresponding to the user (100), a chat or instant messaging application (20) running in his/her mobile terminal (10).

In the part corresponding to the machine (70), for example, in the home where the home appliance is located, an electronic device (60) with specific-purpose hardware which has an interpreter module (63) running as firmware, hosted in the hardware that is registered and acts directly on the machine (70) or the home appliance in this example.

Natural language communication between both parties, i.e., the user (100) and the machine (70), is achieved as a result of the interpreter module (63) which constitutes artificial intelligence, implemented by means of AIML language, for example, which is in charge of interacting with the user (100) in natural language and of operating on the hardware of the electronic device (60) to which the machine (70) is connected. Therefore a user (100) can, for example, send to the intelligence of the interpreter (63) the message "Turn on" and the intelligence translates the natural language message into a specific command for the machine (70); in this case, to activate a signal which starts up the home appliance to which the intelligence is connected, which in turn may respond with a message "Ready. I'm on." which reaches user (100) through the instant messaging application (20) of the mobile terminal (10). The set of patterns and responses contemplated by the intelligence of the interpreter (63) define a certain "personality" that is unique for each case of use; in the example, the case of home appliances in the home of the user.

More particularly, the example of Figure 1 illustrates the basic structure of the communication system between users (100) and machines (70) as described, comprising the following blocks:
Mobile terminal (10) with connectivity to the Internet (80) to enable access by the users (100) and communication thereof by means of an instant messaging application (20). The application (20) is a computer app for sending written messages, in chat or instant messaging format, and voice over IP, VoIP, format that the user can download in his/her mobile terminal (10), such as a mobile telephone or tablet. This application (20) allows using text or voice messages to chat with other users as well as to configure HW of an electronic device (60) by means of which the user (100) can also chat in natural language with a machine (70).

Server (30), which can be in a dedicated node, proprietary or hosted in the service cloud (90) of the Internet (80), which communicates with the mobile terminal (10) through a radio interface (110A) of the mobile telephony operator (100). The server (30) has an Application Programming Interface, or API (40), by means of which an access protocol for the user (100) to access the machine (70) is programmed, which protocol is supported on a communication interface (110B) of the mobile telephony operator (100) between said server (30) and a router (50). The router terminal (50) can be, for example, in the home communicated with the electronic device (60) that in turn communicates and acts on the machine (70).

The electronic device (60) comprises a hardware structure or electronic board based on a microprocessor (63) with wireless communication (64) and the capability to be integrated in other existing embedded systems. In the hardware with the microprocessor (63), an embedded computer application based on artificial intelligence and on ontologies is implemented in firmware. This firmware has the capability to process digital instructions into natural language and offer them to the user (100) in a comprehensive form of text in the user's native language, as well as in the form of voice. Specifically, the hardware in which this firmware is programmed further comprises the following blocks:
Semantic database (61) or knowledge base based on ontologies.

### Interpreter (62)

Wireless communication ports (64), for example WiFi ports.

Input/output or digital or analog I/O peripherals (65) for connecting the electronic device (60) to the machine (70), and through messages via an integrated bus (120), acting on the functionalities of the machine (70), for example, the functions of a home appliance.

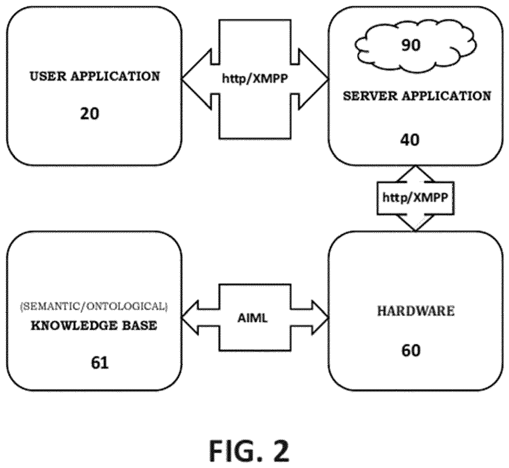

Figure 2 shows the basic blocks of the structure of the system which interact for natural language communication between the user (100) and the machine (70), according to a possible implementation:
The instant messaging application (20) in the mobile terminal (10) of the user (100)
The API application (40) in the server (30) of the cloud (90) with which the mobile terminal (10) has connectivity and with which the instant messaging application (20) exchanges messages using HTTP and XMPP
The electronic device (60) with the hardware that is connected to the machine (70) and communicates with the server (30) and with said machine (70). Communication with the machine (70) is performed through the firmware used by the lexical database (61) or ontology. The hardware and firmware interact through a lightweight data exchange format, such as XML, JSON, MQTT, among others.

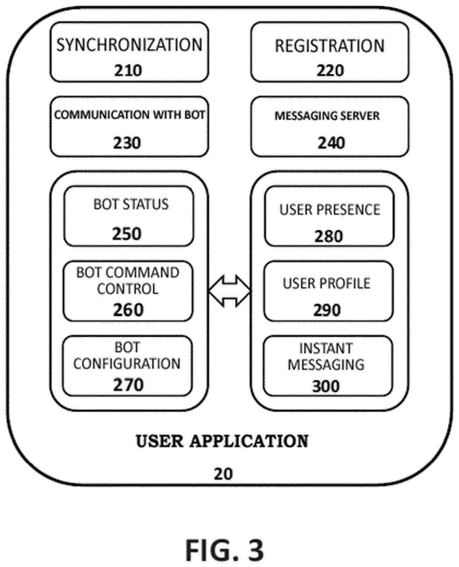

Figure 3 shows a block diagram of the functional module architecture comprised in the instant messaging application (20):
- Synchronization (210): Module in charge of linking or synchronizing user contacts (obtained from different sources, such as for example the standard contact list or social media such as Google+ or Facebook), with other users of the HiThing system.
- Registration (220): Module in charge of registering the user in the HiThing system. The user could be registered in several ways, such as by telephone number, email or social media such as Google+ or Facebook. This module also allows, once registered, adding other means of registration for that same user, such as, for example, one and the same user may have the option of adding an email to his/her account, in addition to the telephone number used for registration.
- Communication with the Bot (230): This module comprises the specific functionality between the user and the bot, defined in modules 250, 260 and 270.
- Messaging Server (240): This module comprises the specific functionality of messaging both between users and between user and bots, defined in modules 280, 290 and 300.
- Bot Status (250): Module in charge of monitoring the current bot status, as well as asynchronously managing the changes occurring therein. It will also manage the bot access control list.
- Bot Command Control Bot (260): Module in charge of managing the different commands that a bot can carry out. It will be capable of both consulting the bot about which are its default commands and sending them to the bot so that it can carry out a specific job.
- Bot Configuration (270): Module in charge of establishing the initial configuration of the bot, by sharing with the bot the data needed so that it can be registered in the system, as well as informing the bot of whom its administrator is and its profile. It also allows updating the bot, as well as the functionality needed to reset the bot to factory mode.
- User Presence (280) of the user: Module in charge of managing the actual user presence, as well as the presence of the user's contacts.
- User Profile (290): Module in charge of managing the user profile in the system, which allows changing it and informing the other contacts about the change thereto.
- Instant Messaging Service Configuration (300): Module in charge of managing the instant messaging between the different entities of the system (users and bots), including both individual messages and group messages.

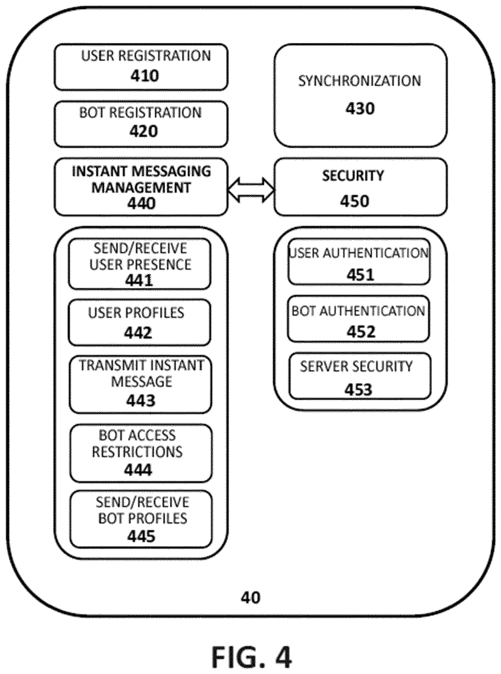

Figure 4 shows a block diagram of the functional module architecture comprised in the application API (40) of the server (30):
- User Registration (410): This module comprises the functionality of registering users in this system.
- Bot Registration (420): This module comprises the functionality of registering bots in the system of the invention.
- Synchronization (430): This module refers to the synchronization of the contacts of a user (in the user's contact list in the mobile terminal) with other system users, either through a Google account, Facebook account, telephone or email.
- Instant Messaging Management (440): This module implements the entire instant messaging functionality, whereby it the following is possible:
   ▪ Send/Receive User Presence Information (441): To know if a user is online or when was the last time a user was connected.
   ▪ User Profile Management (442): To enable changing a user's nickname, profile picture, and visiting card.
   ▪ Send Instant Messages (443): Communication with the different entities.
   ▪ Bot Access Restrictions (444): To enable defining which users are allowed to interact with the bots.
   ▪ Send/Receive Bot Profile Information (445): To change the bot's nickname, profile picture and visiting card.
- Security (450):
   ▪ User Authentication (451): To provide security for user authentications.
   ▪ Bot Authentication (452): To provide security for bot authentication.
   ▪ Server Security (453): To provide security and integrity to the servers.

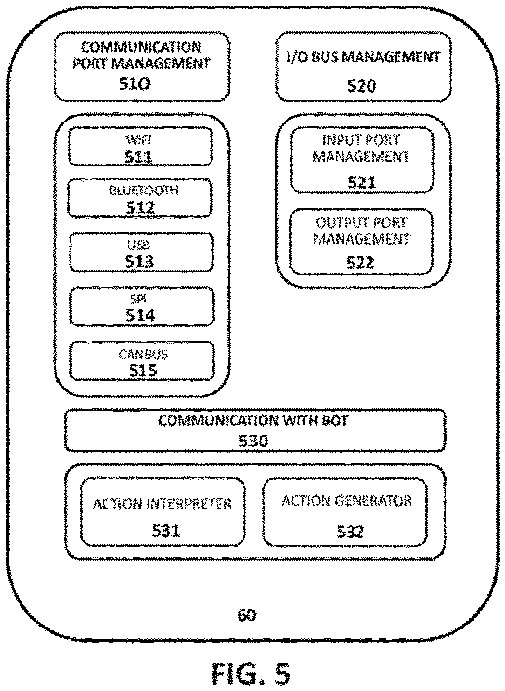

Figure 5 shows a block diagram of the functional module architecture comprised in the electronic device (60) which is connected and communicates with the machine (70), also herein referred to as Bot:
- Communication Port Management (510):
   ▪ WiFi (511)
   ▪ Bluetooth (512)
   ▪ USB (513)
   ▪ SPI (514)
   ▪ CANBus (515)
- Input/output bus and port management (520):
   ▪ Input port management (521), which input ports can be digital and analog.
   ▪ Output port management (522), which output ports can be digital and analog.
- Communication with the Bot (530):
   ▪ Action Interpreter (531), based on the external signals received it updates the status or knowledge (artificial intelligence) base to generate the corresponding command.
   ▪ Action Generator (532), based on the commands received from the artificial intelligence base.

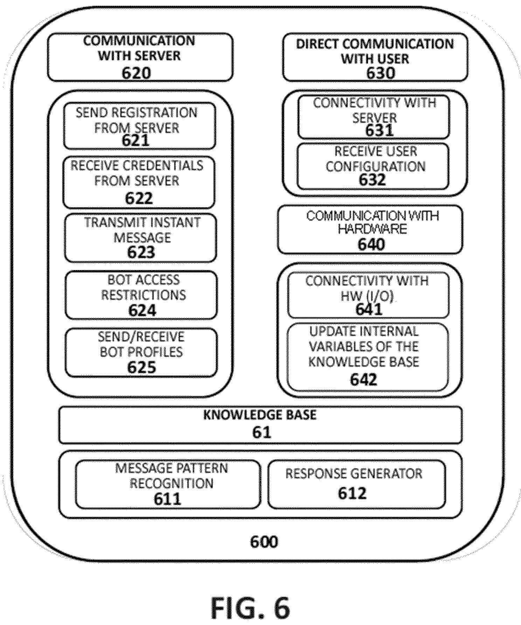

Figure 6 shows a block diagram of the functional module architecture comprised in the firmware (600) implemented on the hardware of the electronic device (60):
- Communication (620) with the Server (30): comprises the operations performed directly between bot and server, among which the following are included:
   ▪ Send registration (621) in the server (30): securely register the bot as a system user.
   ▪ Receive credentials (622) from the server (30): confirm registration of the bot in the server and obtain the data needed for authentication.
   ▪ Send Instant Messages (623): prepare the means that allow a bot to send and receive messages.
   ▪ Bot Access Restrictions (624): define the list of users that are allowed access to the bot.
   ▪ Send/Receive Bot Profiles (625): change the bot's nickname and avatar that other users will see.
- Direct communication (630) with the User (100): operations performed between user and bot, apart from the server, during the initial configuration. This includes:
   ▪ Connectivity with the server (631): configuration of the communication channel that the bot must use to access the server.
   ▪ Receive user configuration (632): local connection with the user's device to receive the initial configuration data.
- Communication with the hardware (640): means which allow the bot to interact with the hardware to which it is connected. This comprises:
   ▪ Connectivity with input/output hardware (641): write and read on the input and output ports for control and monitoring of the external hardware.
   ▪ Update internal variables (642) of the knowledge database (61): follow the status of the system as a whole in the internal logic of the bot.
- Knowledge database (61): artificial intelligence in charge of interacting with the users in natural language. It is based on:
   ▪ Message Pattern Recognition (611): detection of words, expressions and/or emojis in received messages.
   ▪ Response Generator (612): reply to said messages with the suitable response, generated as a function of the intelligence programming.

A possible embodiment of the initial configuration protocol and registration of a bot is described below:
a) Bluetooth message exchange protocol for the configuration of the bot. For the initial configuration of the bot, a protocol on Bluetooth user-to-bot communication technology, as well as the HTTP protocol for bot-to-server communication, which allows a user who has acquired a bot to be added as the administrator thereof and to transmit to it the data needed so that the bot can be connected and registered in the server, has been implemented.
   The process of configuring the bot will be performed according to the following steps:
   Step 1. The bot will be in mode initial configuration (with Bluetooth open, waiting for connections).
   Step 2. The user selects, from his/her mobile device, the bot from the list of Bluetooth devices and sends a message with the necessary configuration parameters to the bot for connection with the server.
   Step 3. The bot saves the information received from the user and uses it to connect with the server, by sending it an HTTP message indicating its registration in the system.
   Step 4. The server validates the information received from the bot and registers it in the system, informing the bot with a response message indicating that the registration was carried out and including the necessary data of the bot to start a session in the XMPP server. If any error were to occur, a response is sent with an error message, indicating the reason for the error.
   Step 5. The bot receives the response message from the server with the information needed for connecting to the XMPP server and informs the user with a message about Bluetooth. If an error in registration occurred, it will inform the user with an error message and go back to the initial configuration status.
   Step 6. The user receives the message from the bot indicating whether or not the process ended correctly. If it did end correctly, it will save the information received from the bot to be able to communicate with it through the XMPP server, or it can send a message to cancel the process, forcing the bot to go back to its initial configuration.
b) Security protocol in the server (30) to prevent fraudulent registrations of bots corresponding to machines (70).
   A security protocol used for registering bots and conceived for preventing fraud and attacks against the server (30) has been developed. In the event of the server being attacked, this protocol allows being able to recover the bot registration service in a secure and reliable manner without having to change the code in the bot, with the subsequent advantage that the bots will not be compromised by the attack.
   In the context of the invention, tokens, such as chains of characters that the bot provides to the server (30) so that the latter may authenticate it as a unique and secure bot, are used. A Secret, defined as a chain of random characters known only by the server (30) and with which the tokens are created, is also used.
   The security protocol is described below:
   Step 1. An appropriate number of random algorithms are implemented to provide a verification token to the bot. The number of algorithms is equivalent to the chances of recovering the tokens in the event of the server being attacked.
   Step 2. These algorithms are saved in a remote site away from the bots and the server together with one unique secret per algorithm and the numbering thereof, which serves as an index for finding it. Step 3. Only one of those algorithms is implemented in the server (30) to check the token.
   Step 4. As many tokens as there are algorithms are saved in each bot, which tokens are produced by said algorithms (each bot has unique tokens).
   Step 5. In order to know which token must be used for authentication, the bot performs an HTTP query in the server (30), asking it which algorithm it is using, the server (30) returns the number of the algorithm that it is using (index) and the bot is authenticated with the token related to that number of algorithm. Step 6. When the bot is registered, it sends the token agreed on with the server (30), and if everything is correct, it allows the bot to be correctly registered.

   In case of attack:
   Step 1. When the server is attacked and the attackers obtain the algorithm to get the tokens, the first thing that must be done is to protect the service, drive the attacker out and make the server secure again so that the attackers do not come back.
   Step 2. Once the key cases have been performed, the algorithm in the server is changed to another one previously conceived and indexed.
   Step 3. The attacker no longer knows what the new algorithm is. Step 4. The bot can be registered as usual. It simply uses another token of those tokens that it has.

A possible embodiment of the specific protocols based on the XMPP standard for the implementation of the system, the communications of which are based on exchanging different messages defined in the XMPP communication protocol, which has been extended to allow adding humans and bots to the system, as well as to allow interaction between them, is described below. Specifically, the following features have been developed:
A. Bot profile configuration.
   All the entities of the system, humans and bots, have a profile, comprising a nickname and an avatar. The administrator of the bot can change the bot profile, both the bot's avatar and alias or nickname, whenever it wants to. To perform this process, the following steps are performed:
   i. The administrator of the bot sends a message with the profile change request to the bot.
   ii. The bot receives the message, obtains its new profile configuration and updates the information in the server by sending it a message with its new profile configuration.
   iii. The server stores the information about the bot, storing its new profile, responding to the bot with a message indicate the result of its request.
   iv. The bot receives the message with the result:
      a. If the change was performed correctly, the bot sends a notification message about the change performed to the different entities interested in the bot status changes.
      b. If any error occurred, the bot informs the administrator about it with an error message.
B. Administration of an access control list for the bots.
   Each bot manages an access control list, hereinafter referred to as ACL, where it stores the different entities, users (100) and machines (70) that have permission to communicate with the registered bot. At first, the only entity that can interact with the bot is the administrator of said bot. Furthermore, only the administrator can change the ACL, adding or deleting entities in it.
   The process for adding/deleting entities in the ACL is the following:
   1) The administrator sends a message to the bot indicating the entities to be added to/deleted from of the bot.
   2) The bot processes the received list and sends a message with the new ACL to the server.
   3) The bot receives the response about the changes performed in the server, where the following cases may arise:
      a. The server correctly stored the ACL. Next the server sends a notification message to the users belonging to its ACL, indicating the new entities that have been added or deleted.
      b. The server reported an error. In this case the bot sends a message to its administrator about the error that occurred, leaving the ACL unchanged.

   In addition to adding/deleting entities in the ACL, any entity associated with a bot may consult its ACL. The process is the following:
   1) An entity sends a message to the bot to obtain its ACL.
   2) The bot sends a listing with the different entities currently added to its ACL.

   If an entity does not have permission to communicate with the bot, the server (30) discards said request.
C. Consulting the status of the bots and sending commands to them.
   An entity (human or machine) can communicate with a bot and obtain its current status, as well as the list of commands the bot can carry out. Any user that is in the ACL of the bot may consult the status of the bot and send it commands. In terms of communication between bots, a first "discovery" phase is added, in which both bots interact with one another in order to see if they are compatible and can communicate by sending commands.
   A user can learn the status of the bot by sending it a status request message, to which the bot responds with a message indicating its current status.
   As discussed above, a user can send commands to a bot using natural language, but it can also ask the bot for a list of specific commands that allow the user to execute them without having to write those instructions in natural language. The process is the following:
   1) The user sends a message to the bot asking for the actions it can carry out.
   2) The bot responds to the user with a message including its actions.

   In terms of communication between bots, given that there may be machines of different manufacturers that do not necessarily have to have anything in common, a first discovery process between bots is added in order to know if both bots understand the same language or actions. Specifically, this process is based on the bots implementing "interfaces", and is defined as follows:
   1) One bot, BOT-A, receives from its administrator a message to include another bot, BOT-B, in its ACL, as defined above.
   2) Once added, BOT-A sends a message to BOT-B asking if it implements an "INTERFACE-1".
   3) BOT-B receives the request. If it implements said interface, it responds to BOT-A with an affirmative message, otherwise it responds with an error.
   4) If BOT-A receives a confirmation about the implemented interface, it can ask for the commands of BOT-B using the mechanism defined above.
D. Update the knowledge base of the bot.
   The responses or actions of the bot with respect to the different inputs sent by the users are stored in a knowledge base that can be updated by the administrator of the bot. The update process is the following:
   1) The administrator must obtain the URL from which it the new knowledge base can be downloaded, sending a message to the server.
   2) The server responds with the URL, and the administrator forwards it in a message to the bot.
   3) The bot receives the URL from where it can download the new knowledge base in order to install it.
   4) Once installed, the bot will respond with message to the administrator indicating that the update was performed.
   5) If any error occurred, a message will be sent to the administrator with said error.
E. Reset the bot to its initial configuration status.
   An administrator may at any time reset a bot to its initial configuration. The resetting process is the following:
   1) The administrator sends a message to the bot indicating that it must be reset to the initial configuration.
   2) The bot sends a request to the server to delete all the data relating to it and it deletes all the local information in order to start a new configuration of the bot.
   3) The bot communicates to the administrator that the resetting has been completed by sending a confirmation message. At this point the bot cannot receive any type of message until it has been reconfigured.
   4) If all the operations were correct, the bot returns a 'result' type IQ:
   5) If any error occurred, a message will be sent to the administrator with said error.
F. Serial communication protocol with the hardware connected to the bot. HiThing has several embedded protocols already factory-designed and -programmed so that the user can use them from the beginning by means of serial communication and USB ports. Through this port the user has the CanBus, UART, and SPI communication protocols already programmed. On the other hand, it also allows the option of the user constructing his/her own communication protocols by making use of the aforementioned communication ports.

## Claims

1. An instant messaging system, **characterized by** comprising:
- an instant messaging application (20), running in a mobile terminal (10) of a user (100), for communication between the user (100) and a machine (70), for communication between multiple users (100) and for communication between multiple machines (70); and
- a server (30) connected to Internet (80) that communicates the mobile terminal (10) with an electronic device (60) which, in turn, communicates and acts on the machine (70), the server (30) comprising an API (40) via which the user (100) accesses the machine (70) by means of messages exchanged by the instant messaging application (20) from the mobile terminal (10) and by means of the electronic device (60).

2. The instant messaging system according to claim 1, **characterized in that** the communication between the user (100) and the machine (70) is performed using natural language.

3. The instant messaging system according to any of the preceding claims, **characterized in that** the communication between the user (100) and the machine (70) comprises using specific commands from the machine (70).

4. The instant messaging system according to any of the preceding claims, **characterized in that** the instant messaging application (20) comprises means for exchanging written and voice over IP messages.

5. The instant messaging system according to any of the preceding claims, **characterized in that** the mobile terminal (10) is selected from a smartphone and a tablet.

6. The instant messaging system according to any of the preceding claims, **characterized in that** the electronic device (60) is connected to the server (30) through a router terminal (50).

7. The instant messaging system according to any of the preceding claims, **characterized by** comprising an electronic device (60) which communicates and acts on the machine (70), and with which the mobile terminal (10) communicates by means of a server (30) connected to Internet (80), the electronic device (60) comprising a hardware configurable by means of the instant messaging application (20) and the hardware comprising an interpreter module (62) for performing translation between natural language messages exchanged by the instant messaging application (20) and specific commands from the machine (70)

8. The instant messaging system according to claim 7, **characterized in that** the interpreter module (62) is implemented by means of firmware embedded in the hardware of the electronic device (60) and is based on artificial intelligence techniques and ontologies.

9. The instant messaging system according to any of claims 7 to 8, **characterized in that** the hardware of the electronic device (60) further comprises
a semantic database (61) based on ontologies and a microprocessor (63) that interact with the interpreter module (62).

10. The instant messaging system according to any of claims 7 to 9, **characterized in that** the hardware of the electronic device (60) further comprises at least one wireless communication port (64) for connecting the electronic device (60) to a router terminal (50) communicating with the server (30).

11. The instant messaging system according to any of claims 7 to 10, **characterized in that** the hardware of the electronic device (60) further comprises at least one input/output peripheral (65) for connecting the electronic device (60) to the machine (70) and acting on the machine (70).

12. The instant messaging system according to any of the preceding claims, **characterized by** comprising:
- a short-range communication protocol for establishing an initial configuration of a machine (70) and registering the machine (70) in the system;
- a message transfer protocol for transferring messages over the Internet to register users (100) and machines (70) in the system and to link the registered machines (70) with social media contacts or contacts from the contact list of the user (100);
- a base protocol for communication of the different entities of the system, both human entities and machines on which extensions are developed for interactions of the users with the machines and the machines with one another, through which commands are sent to the machines using a natural language;
- a language to implement an artificial intelligence that interacts in natural language between the user (100) and the machine (70).

13. The instant messaging system according to claim 12, **characterized in that** the artificial intelligence implementation language is AIML, which recognizes patterns in the messages of the instant messaging application (20), the message transfer protocols for transferring messages over the Internet are XMPP and HTTP, and the short-range communication protocol is Bluetooth.
